# NEUE EUROPÄISCHE PATENTSCHRIFT

(11) **EP 3 060 823 B2**
(45) Veröffentlichungstag und Bekanntmachung des Hinweises auf die Entscheidung über den Einspruch: **28.09.2022**
(45) Hinweis auf die Patenterteilung: 22.11.2017
(21) Anmeldenummer: 14790553.3
(22) Anmeldetag: 20.10.2014
(51) Int. Cl.: F16D 65/092

(54) **VERFAHREN ZUR HERSTELLUNG EINES TRÄGERKÖRPERS MIT TILGERMASSE ZUR VERÄNDERUNG DER SCHWINGUNG FÜR EINEN BREMSBELAG EINER SCHEIBENBREMSE**
METHOD FOR PRODUCING A CARRIER BODY HAVING A DAMPER MASS FOR CHANGING THE VIBRATION FOR A BRAKE LINING OF A DISK BRAKE
PROCÉDÉ DE FABRICATION D'UN CORPS SUPPORT COMPORTANT UNE MASSE ANTIVIBRATOIRE POUR MODIFIER L'OSCILLATION POUR UNE GARNITURE DE FREIN D'UN FREIN À DISQUE

(30) Priorität: 21.10.2013 DE 102013111594
(43) Veröffentlichungstag der Anmeldung: 31.08.2016
(73) Patentinhaber: Federal-Mogul Bremsbelag GmbH, 21509 Glinde (DE)
(72) Erfinder: MÜLLER, Christian, 21465 Reinbek (DE); KARATAS, Ilhami, 21509 Glinde (DE)
(74) Vertreter: RGTH
(86) Internationale Anmeldenummer: PCT/EP2014/072449
(87) Internationale Veröffentlichungsnummer: WO 2015/059098

(56) Entgegenhaltungen:
- EP-A1- 1 710 460
- EP-A1- 2 446 165
- EP-B1- 1 307 665
- WO-A1-2009/001381
- WO-A1-2009/001381
- WO-A1-2015/059097
- DE-A1- 3 315 758
- DE-A1- 3 918 369
- DE-A1- 4 326 676
- DE-A1- 10 305 308
- DE-A1- 10 331 052
- DE-A1- 19 812 133
- DE-A1- 19 846 463
- DE-C- 538 337
- DE-T2- 68 917 118
- DE-T2- 69 223 612
- US-A1- 2004 134 725
- "Presseinheiten" In: LOTTER, B. et al.: "Montage in der industriellen Produktion. 2. Auflage", 2012, Springer-Verlag, Berlin Heidelberg ISBN: 978-3-642-29060-2 page 228,229,
- "Nieten" In: LUEGER O.: "Lexikon der gesamten Technik", 1920, Deutsche Verlags-Anstalt vol. 6, pages 612-623,
- "Travail dépensé" In: Fremont C. H.: "Étude expérimentale du rivetage", 1906, Paris page 13,
- "Trägerkörpers für Bremsbelag", TRW KATALOG, 2012,
- Anonymous: "Radial-Nieten jetzt bis 100 kN", Euroblech, 18 August 2005 (2005-08-18),
- Anonymous: "Tweddell's hydraulische Nietmaschine", Polytechnisches Journal, 8 January 1977 (1977-01-08), pages 33-36,
- DIN: "Manufacturing processes joining - Part 5: Joining by forming processing - Classification, subdivision, terms anddefinitions", DIN 8593-5:2003-09, September 2003 (2003-09), pages 1-14,
- Y1, Y2a, Y2b, Y2c, Y3a, Y3b, Y4: Screenshots von YouTube
- P1, P2: Auszuge aus der Onlineversion des PONS-Wörterbuch
- WW7: K.-H. Decker: ?Maschinenelement - Gestaltung und Berechnung". 8. Auflaqe. Hanser Verlag, 1982

## Beschreibung

Die Erfindung betrifft ein Verfahren zur Herstellung eines Trägerkörpers für einen Bremsbelag einer Scheibenbremse, wobei an einer Reibbelagträgerplatte des Trägerkörpers zur Veränderung der Schwingung mindestens eine erste Tilgermasse starr angeordnet wird.

### Stand der Technik

Aus dem Stand der Technik ist bekannt, an einer Reibbelagträgerplatte für Bremsbeläge Massenelemente zur Veränderung der Schwingung und somit zur Geräuschminderung anzubringen.

Aus der EP 1 307 665 B1 ist ein Bremsklotz für eine Scheibenbremse bekannt, der eine Platte zum Tragen eines Reibbelages aufweist, wobei der Bremsklotz eine Einrichtung aufweist, die der Platte starr zugeordnet ist, um einen einzelnen starren Körper zu bilden und zum Variieren der Masse von zumindest einem Teil der Platte, um eine Trägheit des Bremsklotzes zu erreichen, die im Wesentlichen Schwingungen des Bremsklotzes verhindert, die ein Geräusch der Scheibenbremse während des Bremsens verursachen könnte.

In der DE 10 331 052 A2 wird eine Bremsbelagrückenplatte für einen Bremsbelag einer Fahrzeug-Scheibenbremse beschrieben. Dabei ist an der Bremsbelagrückenplatte eine Tilgermasse zur Veränderung der Schwingung vorgesehen, wobei an einem Tragabschnitt für den Bremsbelag mindestens ein länglicher Arm angeformt ist, der ein mit dem Tragabschnitt verbundenes Ende und ein freies Ende aufweist, bis zu einem freien Ende berührungsfrei neben dem Tragabschnitt verläuft und in der Haupterstreckungsebene der Bremsbelagrückenplatte liegt.

Aus der WO 2009/001 381 A1 ist ein Bremsklotz für Scheibenbremsen bekannt, welcher eine Platte, die als Stütze für eine Reibmaterialschicht dient, aufweist, wobei zumindest eine Last an die Platte angelegt ist und daran befestigt ist, mittels Klemmen. Die Last verändert die Masse von zumindest einem Teil von der Platte, um eine Trägheit von dem Bremsklotz zu erzielen, die im Wesentlichen die Vibrationen von dem Bremsklotz, während dem Bremsen verhindert. Die Last weist zumindest eine Stoßfläche auf, die geeignet ist, gegen die Kante von der Platte zu stoßen und dadurch eine Beschränkung der Rotation von der Last um eine Rotationsachse von der Scheibe definiert.

### Darstellung der Erfindung: Aufgabe, Lösung, Vorteile

Aufgabe der vorliegenden Erfindung ist es, ein Verfahren zur Herstellung eines Trägerkörpers für einen Reibbelag einer Scheibenbremse derart weiter zu verbessern, dass die starre Verbindung zwischen der Reibbelagträgerplatte des Trägerkörpers und einer Tilgermasse des Trägerkörpers robuster gegenüber den im Stand der Technik vorgeschlagenen Lösungen ist und höheren Belastungen standhält.

Diese Aufgabe wird durch ein Verfahren zur Herstellung eines Trägerkörpers für einen Bremsbelag einer Scheibenbremse gemäß Anspruch 1 gelöst.

Der Trägerkörper weist nach Durchführung der erfindungsgemäßen Herstellungsverfahrens eine Reibbelagträgerplatte zur Aufnahme eines Reibbelags sowie mindestens eine starr mit der Reibbelagträgerplatte verbundene erste Tilgermasse zur Veränderung der Schwingung_auf. Das Herstellungsverfahren weist erfindungsgemäß die folgenden Schritte auf:
a) Einsetzen eines ersten stiftförmigen Vorsprungs der ersten Tilgermasse in ein erstes Loch der Reibbelagträgerplatte, wobei der erste stiftförmige Vorsprung von einer ersten Seitenfläche der ersten Tilgermasse hervorsteht,
b) Andrücken der ersten Tilgermasse an die Reibbelagträgerplatte, damit die erste Seitenfläche der ersten Tilgermasse an einer ersten Seitenfläche der Reibbelagträgerplatte anliegt,
c) Ausüben einer senkrecht auf den ersten stiftförmigen Vorsprung gerichteten Kraft, durch Pressen, solange, bis der erste stiftförmige Vorsprung soweit gestaucht ist, dass dieser innerhalb des ersten Lochs zumindest bereichsweise einen Formschluss mit einer Innenwand des ersten Lochs bildet.

Ferner sieht das erfindungsgemäße Herstellungsverfahren vor, dass die senkrecht auf den ersten stiftförmigen Vorsprung gerichtete Kraft durch Pressen solange ausgeübt wird, bis eine starre Verbindung zwischen der Reibbelagträgerplatte und der ersten Tilgermasse besteht.

Die Reibbelagträgerplatte kann dabei aus jedem geeigneten Material bestehen und ist im Wesentlichen plattenförmig ausgebildet. Zur Herstellung eines Bremsbelages wird ein Reibbelag, beziehungsweise Reibbelagmaterial, auf der ersten Seitenfläche der Reibbelagträgerplatte angebracht.

Durch das Vorsehen einer Tilgermasse, welche starr mit der Reibbelagträgerplatte verbunden ist, kann die Schwingung verändert und somit Geräusche beim Bremsen reduziert werden. Hierdurch wird die Eigenfrequenz der Vorrichtung verändert. Unter einer Tilgermasse ist im Sinne dieser Erfindung ein Massenelement aus jedem geeigneten Material zu verstehen, welches nicht an mehreren Objekten befestigt, beziehungsweise starr mit mehreren Objekten verbunden ist, sondern lediglich mit der Reibbelagträgerplatte des Trägerkörpers starr in Verbindung steht.

Unter einer starren Verbindung ist im Sinne dieser Erfindung eine Verbindung zwischen Reibbelagträgerplatte und der Tilgermasse zu verstehen, wobei die Tilgermasse nicht drehbar oder schwenkbar um eine Achse ist, sondern fest an der Reibbelagträgerplatte in einer bestimmten und vorgegebenen Position angeordnet ist. Somit kann die starre Verbindung zwischen der Reibbelagträgerplatte und der ersten Tilgermasse lediglich durch Einwirkung von Gewalt oder sehr hoher Kraft getrennt werden.

Unter einem stiftförmigen Vorsprung, welcher von der ersten Seitenfläche der ersten Tilgermasse hervorsteht, ist ein länglich ausgebildeter Vorsprung zu verstehen. Beispielsweise kann es sich um einen zylinderförmigen, kegelförmigen, sowie auch um einen eckig ausgestalteten, länglichen Vorsprung handeln. Unter länglichem Vorsprung ist ein Vorsprung zu verstehen, welcher eine größere Länge als maximale Breite aufweist.

Unter dem Kopf des stiftförmigen Vorsprungs ist das Ende des stiftförmigen Vorsprungs zu verstehen. Somit ist der Kopf des stiftförmigen Vorsprungs im Bereich einer Stirnseite des ersten stiftförmigen Vorsprungs angeordnet, wobei diese Stirnseite von der ersten Seitenfläche der ersten Tilgermasse abgewandt ist. Somit erstreckt sich der stiftförmige Vorsprung, ausgehend von der ersten Seitenfläche der ersten Tilgermasse, zu seinem Ende beziehungsweise seinem Kopf. Der Kopf des stiftförmigen Vorsprungs ist einstückig mit dem stiftförmigen Vorsprung ausgebildet. Der stiftförmige Vorsprung ist einstückig mit der Tilgermasse ausgebildet. Der Kopf des stiftförmigen Vorsprungs wird durch den stirnseitigen Bereich des stiftförmigen Vorsprungs gebildet. Vor Ausüben einer Kraft auf dem stiftförmigen Vorsprung, beziehungsweise vor Herstellung der starren Verbindung zwischen der Reibbelagträgerplatte und der ersten Tilgermasse, stellt die Stirnseite des stiftförmigen Vorsprungs diesen Kopf dar. Während der Ausübung einer Kraft auf den stiftförmigen Vorsprung wird dieser Kopf verformt und weist die Form eines flachen Kopfes und / oder die Form eines Pilzkopfes auf. Dabei weist dieser Kopf nach Ausübung der Kraft einen gegenüber dem restlichen stiftförmigen Vorsprung einen größeren Durchmesser oder eine größere maximale Breite auf. Dieser Kopf wird somit durch die Ausübung der Kraft derart verformt, dass er umfänglich betrachtet verbreitert wird.

Da der erste stiftförmige Vorsprung derart in das erste Loch der Reibbelagträgerplatte eingesetzt ist, dass der Kopf des ersten stiftförmigen Vorsprungs aus dem ersten Loch hervorsteht, ist der erste stiftförmige Vorsprung länger ausgebildet als die Tiefe des ersten Lochs. Vorzugsweise ist vorgesehen, dass vor Ausüben einer Kraft auf den ersten stiftförmigen Vorsprung und nach Einsetzen des ersten stiftförmigen Vorsprungs in das erste Loch der erste stiftförmige Vorsprung nicht nur mit dessen Stirnseite, sondern auch darüber hinaus aus dem ersten Loch hervorsteht. Nach Ausüben der Kraft auf den ersten stiftförmigen Vorsprung steht dieser noch mit dessen Kopf aus dem ersten Loch hervor. Dabei wird der erste stiftförmige Vorsprung dadurch in das erste Loch der Reibbelagträgerplatte eingesetzt, indem die Reibbelagträgerplatte auf die erste Tilgermasse mit nach oben vorstehendem erstem stiftförmigem Vorsprung aufgesetzt wird.

Unter dem Verfahrensschritt "Andrücken der ersten Tilgermasse an die Reibbelagträgerplatte" ist zu verstehen, dass mittels eines geeigneten Mittels entweder die erste Tilgermasse auf die Reibbelagträgerplatte gedrückt wird und/oder die Reibbelagträgerplatte auf die erste Tilgermasse gedrückt wird. Beispielsweise könnte mittels eines Niederhalters die Reibbelagträgerplatte auf die erste Tilgermasse gedrückt werden, beziehungsweise die Reibbelagträgerplatte, welche auf die erste Tilgermasse aufgesetzt wurde, niedergedrückt werden.

Unter dem Begriff "senkrecht auf den ersten stiftförmigen Vorsprung" ist im Sinne der vorliegenden Erfindung zu verstehen, dass eine Kraft auf den Kopf des ersten stiftförmigen Vorsprungs, also auf das Ende des stiftförmigen Vorsprungs, welches aus dem ersten Loch der Reibbelagträgerplatte nach Einsetzen in das erste Loch hervorsteht, ausgeübt wird. Dadurch wird durch Pressen der erste stiftförmige Vorsprung in seiner Längsrichtung gestaucht. Das bedeutet, dass der erste stiftförmige Vorsprung nach Ausüben der senkrecht gerichteten Kraft eine kürzere Länge aufweist als vor Ausüben der senkrecht gerichteten Kraft. Des Weiteren weist der erste stiftförmige Vorsprung nach Ausüben der senkrecht gerichteten Kraft zumindest bereichsweise eine größere Breite beziehungsweise Dicke, als vor Ausüben der senkrecht gerichteten Kraft auf. Insbesondere in den Bereichen der zugenommenen Breite beziehungsweise Dicke steht der erste stiftförmige Vorsprung nach Ausüben der senkrecht gerichteten Kraft über einen Formschluss mit der Innenwand des ersten Lochs der Reibbelagträgerplatte in Kontakt.

Unter Ausüben einer Kraft, durch Pressen, ist im Sinne der vorliegenden Erfindung zu verstehen, dass die Kraft nicht nur schlagartig, wie beispielsweise beim Nieten, sondern durch Drücken beziehungsweise Pressen auf den ersten stiftförmigen Vorsprung ausgeübt wird. Dadurch, dass die Kraft nicht schlagartig, sondern durch Drücken beziehungsweise Pressen sowie senkrecht auf den ersten stiftförmigen Vorsprung gerichtet wird, kann das Material des ersten stiftförmigen Vorsprungs besser gestaucht werden. Somit füllt der erste stiftförmige Vorsprung nach Ausüben der senkrecht gerichteten Kraft das erste Loch der Reibbelagträgerplatte besser aus und bildet einen besseren und insbesondere höheren Formschlussanteil zwischen dem ersten stiftförmigen Vorsprung und der Innenwand des ersten Lochs. Durch den besseren Formschluss, beziehungsweise durch den höheren Formschlussanteil zwischen dem ersten stiftförmigen Vorsprung und der Innenwand des ersten Lochs kann eine robustere Verbindung zwischen der Reibbelagträgerplatte und der ersten Tilgermasse erreicht werden. Ein derart hergestellter Trägerkörper hält im Betrieb somit höheren Belastungen stand.

Bevorzugterweise ist vorgesehen, dass die senkrecht auf den ersten stiftförmigen Vorsprung gerichtete Kraft durch Pressen solange ausgeübt wird, bis der erste stiftförmige Vorsprung soweit gestaucht ist, dass dieser innerhalb des ersten Lochs in zumindest einem Bereich einen vollumfänglichen Formschluss mit der Innenwand des ersten Lochs bildet. Beispielsweise wird die senkrecht gerichtete Kraft solange auf den ersten stiftförmigen Vorsprung ausgeübt, bis im Bereich des Ausgangs des ersten Lochs, also der an den Kopf des ersten stiftförmigen Vorsprungs direkt anschließende Bereich des ersten Lochs, ein vollumfänglicher Formschluss innerhalb des ersten Lochs zwischen dem ersten stiftförmigen Vorsprung und der Innenwand des ersten Lochs gebildet ist. Ferner könnte die senkrecht gerichtete Kraft solange auf den ersten stiftförmigen Vorsprung ausgeübt werden, bis ein vollumfänglicher Formschluss innerhalb des ersten Lochs zwischen dem ersten stiftförmigen Vorsprung und der Innenwand des ersten Lochs im Bereich der Mitte und/oder des Anfangs des stiftförmigen Vorsprungs gebildet ist.

Insbesondere dadurch, dass der Formschluss zwischen dem ersten stiftförmigen Vorsprung und der Innenwand des ersten Lochs zumindest bereichsweise vollumfänglich gebildet wird, ist die starre Verbindung zwischen der ersten Tilgermasse und der Reibbelagträgerplatte robuster und hält höheren Belastungen stand.

Des Weiteren ist bevorzugterweise vorgesehen, dass die senkrecht auf den ersten stiftförmigen Vorsprung gerichtete Kraft durch Pressen solange ausgeübt wird, bis der erste stiftförmige Vorsprung soweit gestaucht ist, dass dieser innerhalb des ersten Lochs im Wesentlichen über die gesamte Tiefe des ersten Lochs einen Formschluss mit der Innenwand des ersten Lochs bildet. Dabei ist besonders bevorzugterweise vorgesehen, dass die senkrecht gerichtete Kraft solange ausgeübt wird, bis der erste stiftförmige Vorsprung sowohl vollumfänglich sowie auch über die gesamte Tiefe des ersten Lochs einen Formschluss mit der Innenwand des ersten Lochs bildet. Somit ist besonders bevorzugterweise vorgesehen, dass nach Ausübung der senkrecht gerichteten Kraft auf den ersten stiftförmigen Vorsprung im gesamten Bereich innerhalb des ersten Lochs ein Formschluss zwischen dem ersten stiftförmigen Vorsprung und der Innenwand des ersten Lochs gebildet ist.

Die senkrecht auf den ersten stiftförmigen Vorsprung gerichtete Kraft, durch Pressen, wird bevorzugterweise über die gesamte Pressdauer mit einer im Wesentlichen konstanten Stärke ausgeübt. Somit ist bevorzugterweise vorgesehen, dass die senkrecht gerichtete Kraft auf den ersten stiftförmigen Vorsprung mittels einer vorgegebenen Stärke ausgeübt wird und über die gesamte Pressdauer hinweg konstant gehalten wird. Durch ein derart gleichmäßiges Ausüben der Kraft auf den ersten stiftförmigen Vorsprung können Materialbeschädigungen, insbesondere im Bereich des Kopfes des ersten stiftförmigen Vorsprungs, vermieden werden. Beispielsweise kann somit vermieden werden, dass das Material ausfranst oder Rissbildungen im Bereich des Kopfes des ersten stiftförmigen Vorsprungs nach Ausüben der Kraft aufweist. Auch hierdurch wird die starre Verbindung zwischen der Reibbelagträgerplatte und der ersten Tilgermasse robuster gestaltet.

Die senkrecht auf den ersten stiftförmigen Vorsprung gerichtete Kraft wird, durch Pressen, über eine Pressdauer von 1 s bis 2,5 s, ausgeübt. Somit ist bevorzugterweise vorgesehen, dass die Kraft erheblich länger als beim Schlagen, beispielsweise beim Vernieten, auf den ersten stiftförmigen Vorsprung ausgeübt wird. Hierdurch kann erreicht werden, dass das Material des ersten stiftförmigen Vorsprungs schonender und gleichmäßiger verformt, beziehungsweise gestaucht wird. Somit kann vermieden werden, dass das Material des ersten stiftförmigen Vorsprungs beim Ausüben der senkrecht gerichteten Kraft beschädigt, beispielsweise ausgefranst, wird oder Risse gebildet werden.

Außerdem ist bevorzugterweise vorgesehen, dass die senkrecht auf den ersten stiftförmigen Vorsprung gerichtete Kraft, durch Pressen, mit einer Stärke von 10 kN bis 80 kN, besonders bevorzugterweise mit einer Stärke zwischen 20 kN und 60 kN, sowie ganz besonders bevorzugterweise mit einer Stärke von 25 kN bis 50 kN ausgeübt wird. Beispielsweise könnte die senkrecht gerichtete Kraft mit einer Stärke von 30 kN bis 35 kN, sowie über eine Pressdauer von 1 s bis 2,5 s konstant ausgeübt werden.

Zur Herstellung einer starren Verbindung zwischen der Reibbelagträgerplatte und der ersten Tilgermasse ist vorgesehen, dass ausschließlich eine senkrecht auf den ersten stiftförmigen Vorsprung gerichtete Kraft, durch Pressen, ausgeübt wird. Somit ist vorgesehen, dass zusätzlich zur senkrecht ausgerichteten Kraft, keine anderweitig ausgerichtete Kraft auf den ersten stiftförmigen Vorsprung ausgeübt wird. Zur Herstellung einer starren Verbindung zwischen der Reibbelagträgerplatte und der ersten Tilgermasse wird keine seitwärts oder schräg auf den Kopf des ersten stiftförmigen Vorsprungs gerichtete Kraft ausgeübt. Des Weiteren ist nicht vorgesehen, dass während des Ausübens der senkrecht gerichteten Kraft Drehbewegungen des Andrückers, beziehungsweise eines Presskopfes, oder Drehbewegungen der ersten Tilgermasse vorgenommen werden. Somit ist ausschließlich eine senkrecht auf den ersten stiftförmigen Vorsprung gerichtete Kraft, durch Pressen, zur Herstellung einer starren Verbindung zwischen der Reibbelagträgerplatte und der ersten Tilgermasse vorgesehen.

Während des Ausübens der senkrecht auf den ersten stiftförmigen Vorsprung gerichteten Kraft ist kein Vertaumeln des Presskopfes oder der Tilgermasse vorgesehen.

Ferner ist bevorzugterweise vorgesehen, dass die senkrecht auf den ersten stiftförmigen Vorsprung gerichtete Kraft, durch Pressen, mittels eines Presskopfes ausgeübt wird. Dabei weist der Presskopf eine Druckfläche auf, welche während des Pressvorgangs, beziehungsweise während der Ausübung der Kraft auf den ersten stiftförmigen Vorsprung, dem Kopf des ersten stiftförmigen Vorsprungs zugewandt ist. Der Presskopf wird mit seiner Druckfläche senkrecht auf den Kopf des ersten stiftförmigen Vorsprungs gedrückt beziehungsweise gepresst. Dabei stellt der Kopf des ersten stiftförmigen Vorsprungs den Endbereich, das heißt, den stirnseitigen Bereich, der von der ersten Seitenfläche der ersten Tilgermasse abgewandt ist, dar.

Die Druckfläche des Presskopfes ist bevorzugterweise im Wesentlichen glatt. Das bedeutet, dass die Druckfläche des Presskopfes keine größeren Unebenheiten beziehungsweise Vorsprünge oder Ausnehmungen aufweist. Des Weiteren ist bevorzugt, dass die Druckfläche des Presskopfes eine ebene Fläche darstellt. Dadurch wird erreicht, dass nach Ausüben der Kraft auf den ersten stiftförmigen Vorsprung der Kopf des stiftförmigen Vorsprungs eine ebenfalls im Wesentlichen ebene stirnseitige Fläche aufweist. Alternativerweise kann die Druckfläche des Presskopfes eine konkave Form aufweisen, dadurch wird erreicht, dass nach Ausüben der Kraft auf den ersten stiftförmigen Vorsprung der Kopf des ersten stiftförmigen Vorsprungs eine nach oben gewölbte Form, beziehungsweise eine konvexe Form, aufweist.

Die Druckfläche des Presskopfes wird bevorzugterweise beim Ausüben der Kraft parallel zum Kopf, das heißt, parallel zur Stirnseite des ersten stiftförmigen Vorsprungs ausgerichtet. Somit wird die Druckfläche des Presskopfes parallel zur, von der ersten Seitenfläche der ersten Tilgermasse abgewandten, Stirnseite des ersten stiftförmigen Vorsprungs ausgerichtet. Ferner ist somit bevorzugterweise vorgesehen, dass die Druckfläche des Presskopfes beim Ausüben der Kraft im Wesentlichen parallel zu ersten Seitenfläche der ersten Tilgermasse und/oder parallel zur ersten Seitenfläche der Reibbelagträgerplatte ausgerichtet wird.

Bevorzugterweise ist ein Vorschub zwischen Presskopf, das heißt zwischen der Druckfläche des Presskopfes, und dem Kopf des ersten stiftförmigen Vorsprungs von weniger als 100 cm vorgesehen. Dies bedeutet, dass der Presskopf vor Ausüben der Kraft auf den stiftförmigen Vorsprung aus einer Ruhestellung in Richtung des Kopfes des ersten stiftförmigen Vorsprungs bewegt wird, wobei während dieser Ruhestellung der Abstand zwischen der Druckfläche des Presskopfes und dem Kopf des ersten stiftförmigen Vorsprungs weniger als 100 cm ist. Besonders bevorzugterweise ist der Vorschub kleiner als 50 cm, beziehungsweise ganz besonders bevorzugterweise kleiner als 25 cm. Der Vorschub kann äußerst bevorzugterweise kleiner als 10 cm oder kleiner als 5 cm sein. Somit unterscheidet sich der Pressvorgang von einer Schlagbewegung nicht nur durch die längere Pressdauer, sondern auch durch einen geringeren Vorschub beziehungsweise geringeren Abstand zwischen der Druckfläche des Presskopfes und dem Kopf des ersten stiftförmigen Vorsprungs vor Einleiten der Kraft auf den Kopf des ersten stiftförmigen Vorsprungs.

Des Weiteren ist bevorzugt, dass die senkrecht auf den ersten stiftförmigen Vorsprung gerichtete Kraft, durch Pressen, solange ausgeübt wird, bis der erste stiftförmige Vorsprung mit seinem Kopf teilweise im Bereich einer ersten Kante des ersten Lochs an einer ersten Fase anliegt.

Bei der ersten Kante des ersten Lochs handelt es sich um eine umlaufende, das erste Loch begrenzende, Kante, im Bereich des Übergangs zwischen einer zweiten Seitenfläche der Reibbelagträgerplatte und der Lochinnenseite, beziehungsweise der Innenwand, des ersten Lochs.

Unter einer Fase ist im Sinne der vorliegenden Erfindung eine Abschrägung oder Abrundung der ersten Kante zu verstehen. Nach Einsetzen des ersten stiftförmigen Vorsprungs in das erste Loch der Reibbelagträgerplatte und Befestigen der ersten Tilgermasse mit der Reibbelagträgerplatte liegt der Kopf des ersten stiftförmigen Vorsprungs bevorzugterweise zumindest teilweise an der ersten Fase an. Somit schmiegt sich der Kopf des ersten stiftförmigen Vorsprungs bevorzugterweise zumindest bereichsweise an die erste Fase an. Beispielsweise liegt der pilzförmige oder flache Kopf des ersten stiftförmigen Vorsprungs nach Ausüben der Kraft auf den ersten stiftförmigen Vorsprung mit dessen Unterseite und / oder Randbereich an der ersten Fase an

Durch das Vorsehen einer ersten Fase im Bereich der ersten Kante des ersten Lochs in der Reibbelagträgerplatte kann ein besserer Formschluss zwischen der Tilgermasse und der Reibbelagträgerplatte erreicht werden. Hierdurch wird die Verbindung zwischen der ersten Tilgermasse und der Reibbelagträgerplatte robuster. Das Material des stiftförmigen Vorsprungs wird im Bereich seines Kopfes beim Befestigen nicht, beziehungsweise nicht so schnell und leicht, beschädigt. Beispielsweise können somit Rissbildungen im Bereich des Kopfes des ersten stiftförmigen Vorsprungs vermieden oder zumindest verringert werden.

Insbesondere durch das Vorsehen einer ersten Fase im Bereich der ersten Kante des ersten Lochs der Reibbelagträgerplatte kann bei Ausüben einer senkrecht gerichteten Kraft auf das Ende des ersten stiftförmigen Vorsprungs auch eine bessere und höhere Verstauchung im Bereich der Mitte und des Anfangs des ersten stiftförmigen Vorsprungs erreicht werden. Auch somit kann der Formschluss zwischen Reibbelagträgerplatte und der ersten Tilgermasse, beziehungsweise des ersten stiftförmigen Vorsprungs innerhalb des ersten Lochs, also der Formschluss zwischen des ersten stiftförmigen Vorsprungs und der Innenwand des ersten Lochs, erhöht werden.

Die erste Fase kann als Abschrägung oder auch als Abrundung der ersten Kante des ersten Lochs der Reibbelagträgerplatte ausgebildet werden. Bevorzugterweise ist durch die erste Fase eine Abschrägung, ganz besonders bevorzugterweise eine vollumfängliche Abschrägung, der ersten Kante des ersten Lochs der Reibbelagträgerplatte ausgebildet. Durch das Vorsehen der ersten Fase weist das erste Loch in diesem Bereich eine größere Öffnung auf als im Inneren des ersten Lochs auf.

Ferner ist bevorzugterweise vorgesehen, dass die erste Fase in einem ersten Winkel zur Innenwand des ersten Lochs steht, wobei der erste Winkel zwischen 10° und 80° beträgt. Besonders bevorzugterweise liegt der erste Winkel zwischen der ersten Fase und der Innenwand des ersten Lochs zwischen 25° und 60, sowie ganz besonders bevorzugterweise zwischen 40° und 50°. Beispielsweise könnte der erste Winkel 45° betragen. Dabei ist der erste Winkel bevorzugterweise vollumfänglich um das erste Loch herum, beziehungsweise vollumfänglich entlang der ersten Kante des ersten Lochs, im Wesentlichen konstant ausgebildet.

Die erste Fase ragt bevorzugterweise über eine erste Tiefe in das erste Loch hinein, wobei die erste Tiefe weniger als 50 % der gesamten Tiefe des ersten Lochs entspricht. Besonders bevorzugterweise entspricht die erste Tiefe, über welche die erste Fase in das erste Loch hineinragt, weniger als 40 %, ganz besonders bevorzugterweise weniger als 30 %, der gesamten Tiefe des ersten Lochs. Beispielsweise könnte die erste Fase über eine erste Tiefe von weniger als 20 % der gesamten Tiefe des ersten Lochs in das erste Loch hineinragen.

Die Tiefe des ersten Lochs entspricht im Wesentlichen der Dicke der Reibbelagträgerplatte im Bereich des ersten Lochs. Somit ist das erste Loch durchgehend in der Reibbelagträgerplatte vorgesehen. Unter der Tiefe des ersten Lochs ist die gesamte Tiefe beziehungsweise Länge des ersten Lochs durch die Reibbelagträgerplatte zu verstehen. Unter der ersten Tiefe, über welche die erste Fase in das Loch hineinragt, ist der Abstand zwischen einer Ebene, welche auf der zweiten Seitenfläche der Reibbelagträgerplatte liegt und dem Ende der ersten Fase innerhalb des ersten Lochs entlang einer Mittelachse des ersten stiftförmigen Vorsprungs zu verstehen. Somit ist unter der ersten Tiefe der senkrecht in das erste Loch hineinragende Abstand bis zum Ende der ersten Fase zu verstehen.

Der erste stiftförmige Vorsprung kann jede geeignete Form aufweisen. Bevorzugterweise ist der erste stiftförmige Vorsprung konisch ausgebildet. Dabei nimmt der Querschnitt des ersten stiftförmigen Vorsprungs von der ersten Seitenfläche der ersten Tilgermasse aus betrachtet zum Kopf des ersten stiftförmigen Vorsprungs hin ab. Besonders bevorzugterweise nimmt der Querschnitt von der ersten Seitenfläche der ersten Tilgermasse betrachtet zum Kopf des ersten stiftförmigen Vorsprungs hin konstant und linear ab. Somit ist bevorzugterweise vorgesehen, dass der erste stiftförmige Vorsprung zumindest bereichsweise kegelförmig ausgebildet ist oder die Form eines Kegelausschnitts aufweist. Dabei kann der Querschnitt des ersten stiftförmigen Vorsprungs rund, oval oder eckig ausgebildet sein.

Bevorzugterweise ist in der ersten Fase mindestens eine Kerbe angeordnet. Dabei ist besonders bevorzugterweise vorgesehen, dass die mindestens eine Kerbe vollumfänglich um das erste Loch herum angeordnet ist. Ferner ist bevorzugterweise vorgesehen, dass die Kerbe ringförmig in der ersten Fase um das erste Loch herum angeordnet ist. Des Weiteren können mehrere voneinander beabstandete Kerben ringförmig in der ersten Fase um das erste Loch herum angeordnet sein.

Ferner ist bevorzugterweise vorgesehen, dass die Innenwand des ersten Lochs in einem zweiten Winkel zur ersten Seitenfläche der ersten Tilgermasse steht, wobei der zweite Winkel zwischen 75° und 105°, besonders bevorzugterweise zwischen 80° und 100°, sowie ganz besonders bevorzugterweise zwischen 85° und 95°, liegt. Beispielsweise kann der zweite Winkel im Bereich einer zweiten Kante des ersten Lochs im Wesentlichen rechtwinklig ausgebildet sein. Somit ist der Eingangsbereich des ersten Lochs in dem Bereich, in dem die erste Seitenfläche der ersten Tilgermasse an der ersten Seitenfläche der Reibbelagträgerplatte anliegt, bevorzugterweise im Wesentlichen rechtwinklig ausgebildet ist, wobei der Ausgangsbereich des ersten Lochs, also im Bereich der ersten Kante des ersten Lochs, durch die erste Fase abgeschrägt ist.

Der erste stiftförmige Vorsprung ragt bevorzugterweise mit seinem Kopf über eine erste Länge aus dem ersten Loch heraus, wobei die erste Länge weniger als 25 %, besonders bevorzugterweise weniger als 15 %, ganz besonders bevorzugterweise weniger als 10 %, der gesamten Tiefe, beziehungsweise Länge, des ersten Lochs entspricht. Üblicherweise weist eine Reibbelagträgerplatte für einen Bremsbelag einer Scheibenbremse für Kraftfahrzeuge eine Dicke zwischen 5 mm und 15 mm auf. Beispielsweise könnte das erste Loch eine gesamte Tiefe von 10 mm aufweisen, wobei der erste stiftförmige Vorsprung mit seinem Kopf lediglich über eine erste Länge von 1 mm bis 2 mm aus dem ersten Loch herausragt. Die erste Länge, über die der erste stiftförmige Vorsprung mit seinem Kopf aus dem ersten Loch herausragt, wird nach Ausüben der Kraft auf den ersten stiftförmigen Vorsprung, beziehungsweise nach Herstellung der starren Verbindung zwischen Reibbelagträgerplatte und der ersten Tilgermasse bestimmt.

Der erste stiftförmige Vorsprung kann jeden geeigneten Querschnitt aufweisen. Beispielsweise kann der erste stiftförmige Vorsprung einen eckigen, beispielsweise einen dreieckigen, viereckigen, fünfeckigen oder sechseckigen Querschnitt aufweisen. Ferner könnte der erste stiftförmige Vorsprung einen runden oder ovalen Querschnitt aufweisen. Dabei ist bevorzugterweise vorgesehen, dass die Form des ersten Lochs, beziehungsweise der Querschnitt des ersten Lochs einen korrespondierenden Querschnitt zum Querschnitt des ersten stiftförmigen Vorsprungs aufweist. Die maximale Breite des stiftförmigen Vorsprungs ist dabei bevorzugterweise geringfügig kleiner ausgebildet als die minimale Öffnungsbreite des ersten Lochs. Somit kann der erste stiftförmige Vorsprung ohne Verformung oder größerer Krafteinwirkung in das erste Loch eingesetzt werden.

Des Weiteren ist bevorzugterweise vorgesehen, dass während der gesamten Pressdauer die erste Tilgermasse an die Reibbelagträgerplatte gedrückt wird. Somit wird die erste Tilgermasse auch während der Ausübung der senkrecht gerichteten Kraft auf den ersten stiftförmigen Vorsprung an die Reibbelagträgerplatte angedrückt. Hierdurch wird erreicht, dass die erste Tilgermasse mit ihrer ersten Seitenfläche, zumindest bereichsweise, auch nach Herstellung der starren Verbindung zwischen der Reibbelagträgerplatte und der ersten Tilgermasse mit der ersten Seitenfläche der Reibbelagträgerplatte in Kontakt steht, beziehungsweise an dieser anliegt. Hierdurch wird nochmals die starre Verbindung zwischen der ersten Tilgermasse und der Reibbelagträgerplatte robuster ausgestaltet.

Des Weiteren ist bevorzugterweise vorgesehen, dass eine zweite Tilgermasse zur Veränderung der Schwingung starr mit der Reibbelagträgerplatte verbunden wird.

Die zweite Tilgermasse ist bevorzugterweise wie die erste Tilgermasse ausgestaltet. Dabei weist die Reibbelagträgerplatte ein zweites Loch auf, durch die der zweite stiftförmige Vorsprung, nämlich der stiftförmige Vorsprung der zweiten Tilgermasse, eingesetzt wird. Sämtliche vorgenannten Merkmale bezüglich der ersten Tilgermasse, beziehungsweise des ersten Lochs in der Reibbelagträgerplatte, sind auch für die zweite Tilgermasse beziehungsweise das zweite Loch der Reibbelagträgerplatte, vorgesehen. Beispielsweise kann die Reibbelagträgerplatte im Bereich der ersten Kante des zweiten Lochs eine zweite Fase aufweisen, welche nach Einsetzen des zweiten stiftförmigen Vorsprungs zumindest bereichsweise mit dem Kopf des zweiten stiftförmigen Vorsprungs in Verbindung steht.

Ferner sind auch sämtliche vorbeschriebene Verfahrensschritte zur Herstellung des Trägerkörpers, beziehungsweise zur Herstellung einer starren Verbindung zwischen der Reibbelagträgerplatte und der ersten Tilgermasse, für die Herstellung einer starren Verbindung zwischen der Reibbelagträgerplatte und der zweiten Tilgermasse vorgesehen.

### Kurze Beschreibung der Zeichnungen

Fig. 1a schematische Darstellung eines Bremsbelags mit einer Reibbelagträgerplatte und darin angeordneter Löcher zur Aufnahme von Tilgermassen,
Fig. 1b Querschnitt eines Bremsbelags mit einer Reibbelagträgerplatte und einem auf der Reibbelagträgerplatte angeordneten Reibbelag,
Fig. 2a perspektivische Ansicht eines Trägerkörpers mit einer Reibbelagträgerplatte und zwei daran angeordneter Tilgermassen,
Fig. 2b perspektivische Ansicht eines Ausschnitts einer Reibbelagträgerplatte und der damit verbundenen Tilgermasse,
Fig. 3a-3d verschiedene Formen von Tilgermassen,
Fig. 4 schnittbildliche Darstellung eines Ausschnitts der Verbindung einer Tilgermasse mit der Reibbelagträgerplatte,
Fig. 5 schnittbildliche Darstellung eines Ausschnitts der Verbindung einer Tilgermasse mit der Reibbelagträgerplatte, und
Fig. 6 weitere schnittbildliche Darstellung eines Ausschnitts der Verbindung einer Tilgermasse mit der Reibbelagträgerplatte.

### Beispielhafte Darstellungen zur Erläuterung der Erfindung

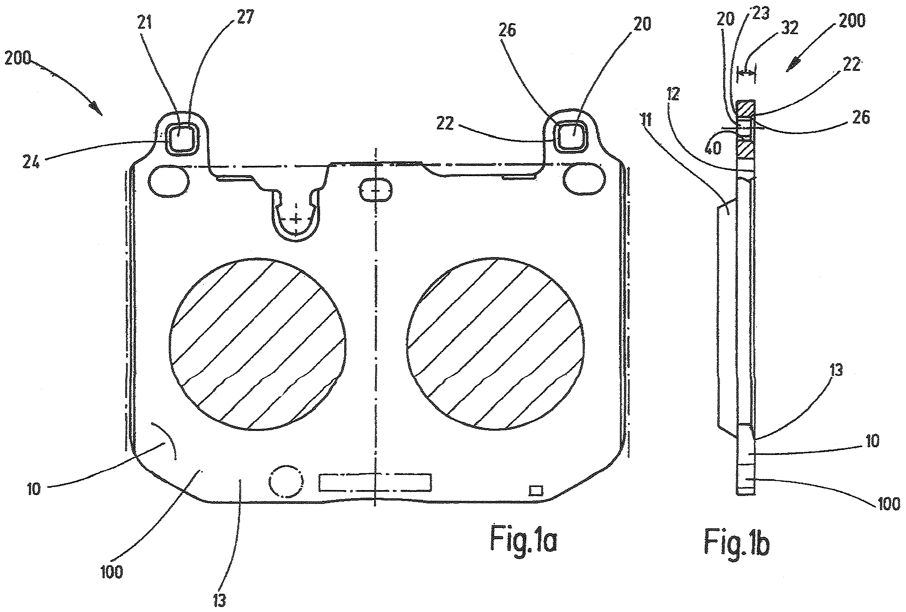

In den Fig. 1a und 1b ist ein Bremsbelag 200 in Vorderansicht sowie im Querschnitt gezeigt. Der Bremsbelag 200 weist einen Trägerkörper 100 auf, wobei lediglich die Reibbelagträgerplatte 10 des Trägerkörpers 100 ohne daran angebrachter Tilgermassen 14, 15 gezeigt ist. Ferner weist der Bremsbelag 200 einen an der ersten Seitenfläche 12 der Reibbelagträgerplatte 10 angeordneten Reibbelag 11 auf.

Die Reibbelagträgerplatte 10 weist an ihren zwei oberen Eckbereichen jeweils ein Loch, nämlich ein erstes Loch 20 und ein zweites Loch 21 zur Aufnahme der stiftförmigen Vorsprünge 18, 19 der beiden Tilgermassen 14, 15 auf. Die Ausgangsöffnung des ersten Lochs wird dabei durch eine erste umlaufende Kante 22 an der zweiten Seitenfläche 13 der Reibbelagträgerplatte 10 begrenzt. Im Bereich dieser ersten Kante 22 des ersten Lochs 20 ist eine erste Fase 26 angeordnet. Dadurch ist die erste Kante 22 des ersten Lochs 20 umlaufend abgeschrägt. Die Reibbelagträgerplatte 10 weist eine Dicke 32 auf, welche im Bereich des ersten Lochs 20 und des zweiten Lochs 21 der jeweiligen Tiefe 33, 34 des entsprechenden Lochs 20, 21 entspricht. Die erste Fase 26 sowie die zweite Fase 27 ragen über eine erste Tiefe 37, beziehungsweise eine zweite Tiefe 38 in das erste Loch 20, beziehungsweise in das zweite Loch 21 hinein. Die erste Fase 26 steht in einem ersten Winkel 35 zur Innenwand 40 des ersten Lochs 20. Die zweite Fase 27 steht in einem zweiten Winkel 36 zur Innenwand 41 des zweiten Lochs 21.

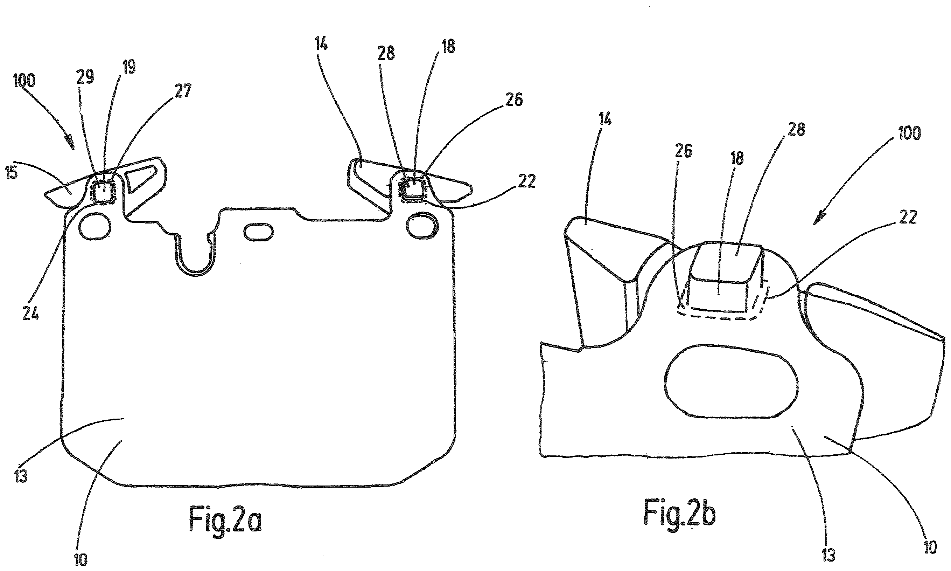

In den Fig. 2a und 2b ist eine perspektivische Ansicht eines Trägerkörpers 100 mit einer Reibbelagträgerplatte 10 und zwei daran starr befestigter Tilgermassen 14, 15 gezeigt. Dabei ist die erste Tilgermasse 14 mit ihrem ersten stiftförmigen Vorsprung 18 im ersten Loch 20 der Reibbelagträgerplatte 10 angeordnet. Wie aus den Fig. 2a und 2b zu sehen ist, steht das Ende beziehungsweise der Kopf 28 des ersten stiftförmigen Vorsprungs 18 aus dem ersten Loch 20 hervor.

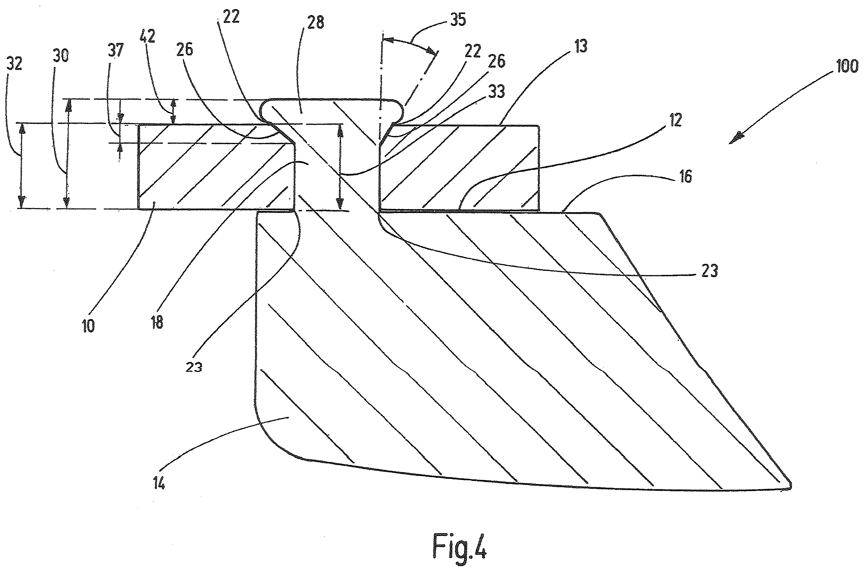

Um die beiden Tilgermassen 14, 15 fest und starr mit der Trägerplatte 10 zu verbinden, wird senkrecht durch Pressen, eine Kraft auf den ersten stiftförmigen Vorsprung 18, beziehungsweise auf den zweiten stiftförmigen Vorsprung 19 ausgeübt. Dabei wird, sowohl der erste stiftförmige Vorsprung 18 sowie auch der zweite stiftförmige Vorsprung 19 gestaucht und insbesondere im Bereich des Kopfes 28 des ersten stiftförmigen Vorsprungs 18 beziehungsweise im Bereich des Kopfes 29 des zweiten stiftförmigen Vorsprungs 19 derart verformt, dass der jeweilige Kopf 28, 29 der beiden stiftförmigen Vorsprünge 18, 19 im Bereich der ersten Kante 22 des ersten Lochs 20, beziehungsweise im Bereich der ersten Kante 24 des zweiten Lochs 21 zumindest teilweise an der jeweiligen Fase 26, 27 anliegt. Die jeweiligen stiftförmigen Vorsprünge 18, 19 stehen nach Ausüben der Kraft, beziehungsweise nach Herstellen der starren Verbindung der beiden Tilgermassen 14, 15 mit der Reibbelagträgerplatte 10 über eine erste Länge 42, beziehungsweise eine zweite Länge 43, aus dem jeweiligen Loch 20, 21 hervor. Diesbezüglich wird auch auf Fig. 4 verwiesen. In den Fig. 2a und 2b ist das Stadium vor Ausübung der Kraft, beziehungsweise vor Herstellen der starren Verbindung gezeigt. In den Fig. 2a und 2b sind die beiden Tilgermassen 14, 15 mit ihren stiftförmigen Vorsprüngen 18, 19 in die Löcher 20, 21 eingesetzt.

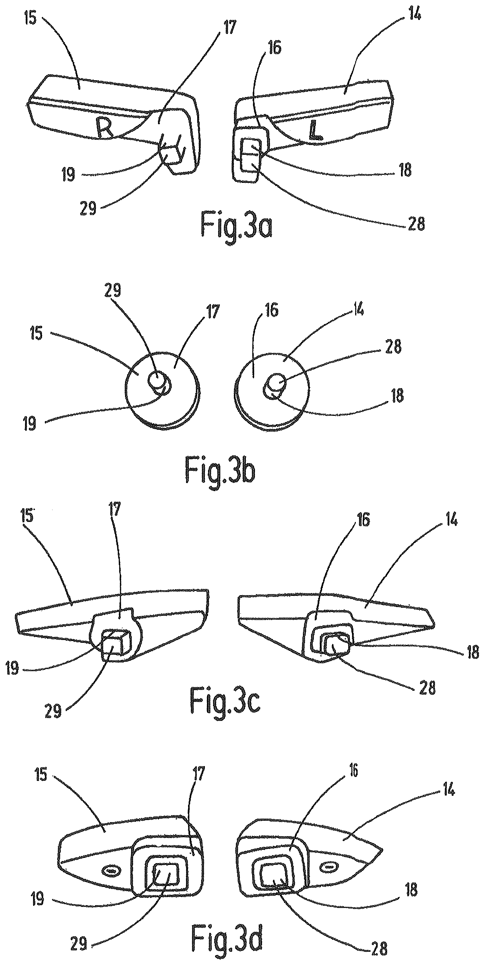

In den Fig. 3a bis 3d sind verschiedene Formen von Tilgermassen 14, 15 gezeigt. Unabhängig von der Form der jeweiligen Tilgermasse 14, 15 weist jede Tilgermasse 14, 15 einen ersten, beziehungsweise zweiten, stiftförmigen Vorsprung 18, 19, welcher von der ersten Seitenfläche 16 der ersten Tilgermasse 14, beziehungsweise der ersten Seitenfläche 17 der zweiten Tilgermasse 15 hervorsteht, auf. Dabei können die stiftförmigen Vorsprünge 18, 19 im Wesentlichen rund (vgl. Fig. 3b) sowie aber auch eckig (vgl. Fig. 3a, 3c und 3d) ausgebildet sein.

Die jeweilige erste Seitenfläche 16, 17 der beiden Tilgermassen 14, 15 steht nach Verbindung der beiden Tilgermassen 14, 15 mit der Reibbelagträgerplatte 10 mit der ersten Seitenfläche 12 der Reibbelagträgerplatte 10 in Verbindung, beziehungsweise liegt an dieser an. In Fig. 4 ist als Schnittdarstellung der Befestigungsbereich zwischen der Reibbelagträgerplatte 10 und einer ersten Tilgermasse 14 gezeigt. Dabei ist der erste stiftförmige Vorsprung 18 der ersten Tilgermasse 14 in das erste Loch 20 der Reibbelagträgerplatte 10 eingesetzt. Mit der ersten Seitenfläche 16 der ersten Tilgermasse 14 liegt die erste Tilgermasse 14 an der ersten Seitenfläche 12 der Reibbelagträgerplatte 10 an. Durch Ausüben einer senkrecht auf den ersten stiftförmigen Vorsprungs 18 gerichteten Kraft, durch Pressen, wurde eine starre Verbindung zwischen Reibbelagträgerplatte 10 und der ersten Tilgermasse 14 erreicht. Der erste stiftförmige Vorsprung 18 wurde über die gesamte Tiefe 33 des ersten Lochs 20 derart gestaucht, dass ein vollumfänglicher und über die gesamte Tiefe 33 des ersten Lochs 20 gebildeter Formschluss zwischen dem ersten stiftförmigen Vorsprung 18 und der Innenwand 40 des ersten Lochs 20 innerhalb des ersten Lochs 20 zu sehen ist. Mit seinem Kopf 28 steht der erste stiftförmige Vorsprung 18 über eine erste Länge 42 aus dem ersten Loch 20 hervor.

Ferner liegt der Kopf 28 des ersten stiftförmigen Vorsprungs 18 bereichsweise direkt an der ersten Fase 26 im Bereich der ersten Kante 22 des ersten Lochs 20 an.

Die Reibbelagträgerplatte 10 weist im Bereich des ersten Lochs 20 eine Dicke 32 auf, welche der Tiefe 33 des ersten Lochs 20 entspricht. Die erste Fase 26 ragt über eine erste Tiefe 37 in das erste Loch 20 hinein. Ferner bildet die erste Fase einen ersten Winkel 35 zur Innenwand 40 des ersten Lochs 20.

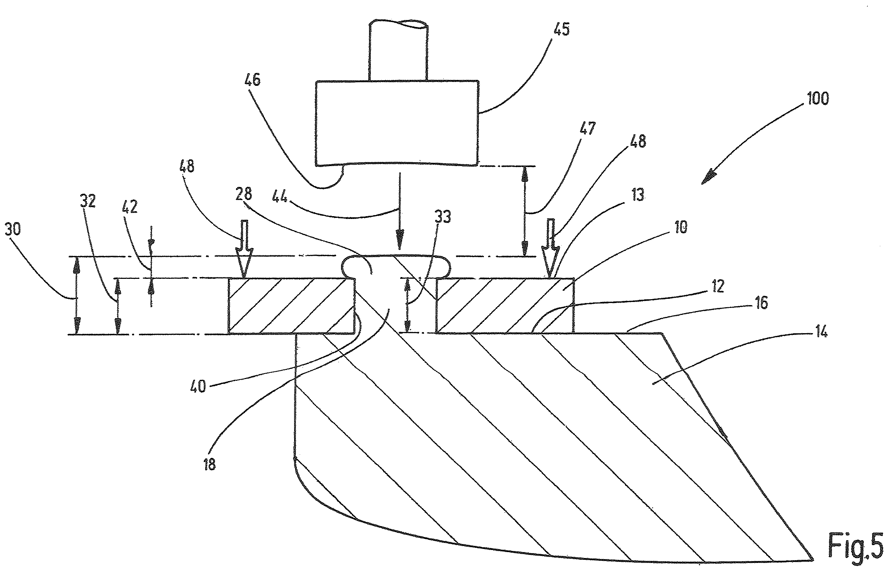

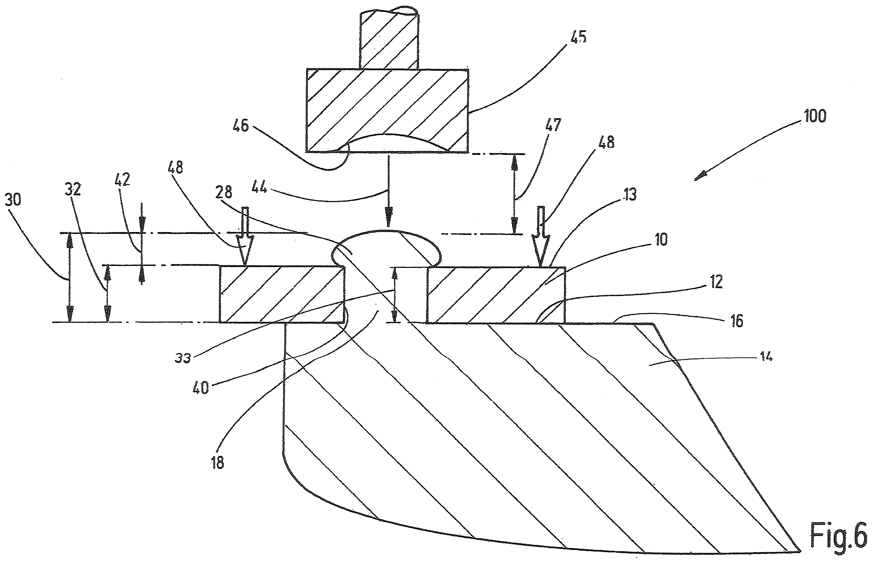

In den Fig. 5 und 6 ist, wie bereits in Fig. 4 als Schnittdarstellung, der Befestigungsbereich zwischen der Reibbelagträgerplatte 10 und einer ersten Tilgermasse 14 gezeigt. Im Gegensatz zur Darstellung in Fig. 4, ist im Bereich des ersten Lochs 20 der Reibbelagträgerplatte 10, beziehungsweise im Bereich der ersten Kante 22 des ersten Lochs 20, keine Fase 26, 27 vorgesehen. Der Winkel zwischen der zweiten Seitenfläche 13 der Bremsbelagträgerplatte 10 und der Innenwand 40 des ersten Lochs 20 ist somit rechtwinklig.

Das Verfahren zur Herstellung des Trägerkörpers 100, beziehungsweise die Verfahrensschritte zur starren Befestigung einer Tilgermasse 14, 15 an einer Reibbelagträgerplatte 10 ist sowohl für eine Ausgestaltung mit Fasen 26, 27 sowie ohne Fasen 26, 27 vorgesehen. Beispielhafterweise wird im Folgenden der Verfahrensschritt des Pressens beziehungsweise des Ausübens einer senkrecht auf den ersten stiftförmigen Vorsprung 18 gerichteten Kraft 44 anhand der Fig. 5 und 6 ohne Fase 26, 27 beschrieben.

In den Fig. 5 und 6 ist, wie auch in Fig. 4, bereits eine starre Verbindung zwischen der Reibbelagträgerplatte 10 und der ersten Tilgermasse 14 gezeigt. Das heißt, der Kopf 28 des ersten stiftförmigen Vorsprungs 18 ist bereits durch die auf den ersten stiftförmigen Vorsprung 18 ausgeübte Kraft 44 verformt. Ferner ist innerhalb des ersten Lochs 20, durch den gestauchten ersten stiftförmigen Vorsprung 18, der Formschluss zwischen der Innenwand 40 des ersten Lochs 20 und des ersten stiftförmigen Vorsprungs 18 zu erkennen.

Zur Herstellung des Trägerkörpers 100 für einen Bremsbelag 200 einer Scheibenbremse 300 wurde hierfür der erste stiftförmige Vorsprung 18 der ersten Tilgermasse 14 in das erste Loch 20 der Reibbelagträgerplatte 10 eingesetzt. Im nächsten Schritt wurde die erste Tilgermasse 14 mittels eines Niederhalters 48 an die Reibbelagträgerplatte 10 angedrückt, damit die erste Seitenfläche 16 der ersten Tilgermasse 14 an der ersten Seitenfläche 12 der Reibbelagträgerplatte 10 anliegt.

Während des Andrückens mittels der Niederhalter 48 wurde mittels eines Presskopfes 45 eine senkrecht auf den ersten stiftförmigen Vorsprung 18 gerichtete Kraft 44 ausgeübt. Hierfür wurde mit der Druckfläche 46 des Presskopfes 45 auf die Stirnseite beziehungsweise den Kopf 28 des ersten stiftförmigen Vorsprungs 18 eine konstante Kraft über eine vorgegebene Pressdauer ausgeübt. Hierfür wurde der Presskopf 45 aus seiner Ruhestellung mit einem Vorschub 47 senkrecht auf den stirnseitigen Bereich beziehungsweise auf den Kopf 28 des ersten stiftförmigen Vorsprungs 18 hinbewegt und dann, im Anschluss die senkrecht auf den ersten stiftförmigen Vorsprung 18 gerichtete Kraft 44, durch Pressen, ausgeübt. Der Vorschub 47 entspricht dem Abstand zwischen der Druckfläche 46 des Presskopfes 45 und dem Kopf 28 des ersten stiftförmigen Vorsprungs 18 in Ruhestellung, das heißt, vor Einleiten der Kraftausübung.

In Fig. 5 ist ein Presskopf 45 mit einer Druckfläche 46 gezeigt, wobei die Druckfläche 46 eine glatte und ebene Fläche ist. Somit ist nach Ausüben der Kraft 44 auf den Kopf 28 des ersten stiftförmigen Vorsprungs 18, der Kopf 28 des ersten stiftförmigen Vorsprungs 18 in dessen Oberfläche als im Wesentlichen glatte ebene Fläche ausgebildet.

In Fig. 6 ist ein Presskopf 45 mit einer Druckfläche 46 gezeigt, wobei die Druckfläche 46 eine konkave Form aufweist. Somit weist der Presskopf 45 eine nach innen gewölbte Druckfläche 46 auf. Nach Ausüben der Kraft 44 auf den Kopf 28 des ersten stiftförmigen Vorsprungs 18 weist die Außenfläche des Kopfes 28 des ersten stiftförmigen Vorsprungs 18 somit eine konvexe, also nach außen gewölbte, Form auf.

### Bezugszeichenliste

- 100: Trägerkörper
- 200: Bremsbelag
- 300: Scheibenbremse

- 10: Reibbelagträgerplatte
- 11: Reibbelag
- 12: erste Seitenfläche der Reibbelagträgerplatte
- 13: zweite Seitenfläche der Reibbelagträgerplatte
- 14: erste Tilgermasse
- 15: zweite Tilgermasse
- 16: erste Seitenfläche der ersten Tilgermasse
- 17: erste Seitenfläche der zweiten Tilgermasse
- 18: erster stiftförmiger Vorsprung
- 19: zweiter stiftförmiger Vorsprung
- 20: erstes Loch
- 21: zweites Loch
- 22: erste Kante des ersten Lochs
- 23: zweite Kante des ersten Lochs
- 24: erste Kante des zweiten Lochs
- 25: zweite Kante des zweiten Lochs
- 26: erste Fase
- 27: zweite Fase
- 28: Kopf des ersten stiftförmigen Vorsprungs
- 29: Kopf des zweiten stiftförmigen Vorsprungs
- 30: Länge des ersten stiftförmigen Vorsprungs
- 31: Länge des zweiten stiftförmigen Vorsprungs
- 32: Dicke der Reibbelagträgerplatte
- 33: Tiefe des ersten Lochs
- 34: Tiefe des zweiten Lochs
- 35: erster Winkel
- 36: zweiter Winkel
- 37: erste Tiefe
- 38: zweite Tiefe
- 40: Innenwand des ersten Lochs
- 41: Innenwand des zweiten Lochs
- 42: erste Länge
- 43: zweite Länge
- 44: Kraft
- 45: Presskopf
- 46: Druckfläche des Presskopfes
- 47: Vorschub
- 48: Niederhalter

## Patentansprüche

1. Verfahren zur Herstellung eines Trägerkörpers (100) für einen Bremsbelag (200) einer Scheibenbremse (300), wobei der Trägerkörper (100) eine Reibbelagträgerplatte (10) zur Aufnahme eines Reibbelags (11) sowie mindestens eine starr mit der Reibbelagträgerplatte (10) verbundene erste Tilgermasse (14) zur Veränderung der Schwingung aufweist, wobei das Verfahren durch folgende Schritte gekennzeichnet ist:
a) Einsetzen eines ersten stiftförmigen Vorsprungs (18) der ersten Tilgermasse (14) in ein erstes Loch (20) der Reibbelagträgerplatte (10), wobei die Reibbelagträgerplatte (10) auf die erste Tilgermasse (14) mit dem nach oben vorstehenden ersten stiftförmigen Vorsprung (18) aufgesetzt wird, wobei der erste stiftförmige Vorsprungs (18) von einer ersten Seitenfläche (16) der ersten Tilgermasse (14) und aus dem ersten Loch (20) hervorsteht und mit der ersten Tilgermasse (14) einstückig ausgebildet ist,
b) Andrücken der ersten Tilgermasse (14) an die Reibbelagträgerplatte (10), damit die erste Seitenfläche (16) der ersten Tilgermasse (14) an einer ersten Seitenfläche (12) der Reibbelagträgerplatte (10) anliegt,
c) Ausüben einer senkrecht auf den ersten stiftförmigen Vorsprung (18) gerichteten Kraft (44) durch Pressen, solange, bis der erste stiftförmige Vorsprung (18) soweit gestaucht ist, dass dieser innerhalb des ersten Lochs (20) bereichsweise einen Formschluss mit einer Innenwand (40) des ersten Lochs (20) bildet, und ein Kopf (28) des ersten stiftförmigen Vorsprungs (18) derart verformt wird, dass er umfänglich betrachtet verbreitert wird, und bis eine starre Verbindung zwischen der Reibbelagträgerplatte (10) und der ersten Tilgermasse (14) besteht, wobei die senkrecht auf den ersten stiftförmigen Vorsprung (18) gerichtete Kraft (44) durch Pressen über eine Pressdauer von 1s bis 2,5s ausgeübt wird, wobei zur Herstellung einer starren Verbindung zwischen der Reibbelagträgerplatte (10) und der ersten Tilgermasse (14) nur die senkrecht auf den ersten stiftförmigen Vorsprung (18) gerichtete Kraft (44) durch Pressen ausgeübt wird und keine Drehbewegung und kein Vertaumeln während der Ausübung der Kraft (44) durchgeführt wird und keine seitwärts auf den ersten stiftförmigen Vorsprung (18) gerichtete Kraft ausgeübt wird.

2. Verfahren nach Anspruch 1, **dadurch gekennzeichnet, dass** in Schritt c) solange die senkrecht auf den ersten stiftförmigen Vorsprung (18) gerichtete Kraft (44) durch Pressen ausgeübt wird, bis der erste stiftförmige Vorsprung (18) soweit gestaucht ist, dass dieser innerhalb des ersten Lochs (20) in einem Bereich einen vollumfänglichen Formschluss mit der Innenwand (40) des ersten Lochs (20) bildet.

3. Verfahren nach Anspruch 1 oder 2, **dadurch gekennzeichnet, dass** in Schritt c) solange die senkrecht auf den ersten stiftförmigen Vorsprung (18) gerichtete Kraft (44) durch Pressen ausgeübt wird, bis der erste stiftförmige Vorsprung (18) soweit gestaucht ist, dass dieser innerhalb des ersten Lochs (20) im Wesentlichen über eine gesamte Tiefe (33) des ersten Lochs (20) einen Formschluss mit einer Innenwand (40) des ersten Lochs (20) bildet.

4. Verfahren gemäß einem der vorhergehenden Ansprüche, **dadurch gekennzeichnet, dass** in Schritt c) die senkrecht auf den ersten stiftförmigen Vorsprung (18) gerichtete Kraft (44) durch Pressen über die gesamte Pressdauer mit einer im Wesentlichen konstanten Stärke ausgeübt wird.

5. Verfahren gemäß einem der vorhergehenden Ansprüche, **dadurch gekennzeichnet, dass** in Schritt c) die senkrecht auf den ersten stiftförmigen Vorsprung (18) gerichtete Kraft (44) durch Pressen mit einer Stärke von 10 kN bis 80 kN, bevorzugterweise von 20 kN bis 60 kN, besonders bevorzugterweise von 25 kN bis 50 kN, ausgeübt wird.

6. Verfahren gemäß einem der vorhergehenden Ansprüche, **dadurch gekennzeichnet, dass** in Schritt c) die senkrecht auf den ersten stiftförmigen Vorsprung (18) gerichtete Kraft (44) durch Pressen mittels eines Presskopfes (45) ausgeübt wird, wobei der Presskopf (45) mit einer Druckfläche (46) senkrecht auf einen Kopf (28) des ersten stiftförmigen Vorsprungs (18) gedrückt oder gepresst wird, wobei der Kopf (28) des ersten stiftförmige Vorsprungs (18) im Bereich der von der ersten Seitenfläche (16) der ersten Tilgermasse (14) abgewandten Stirnseite des ersten stiftförmigen Vorsprungs (18) angeordnet ist, wobei die Druckfläche (46) des Presskopfes (45) dem Kopf (28) des ersten stiftförmige Vorsprung (18) zugewandt wird.

7. Verfahren gemäß Anspruch 6, **dadurch gekennzeichnet, dass** die Druckfläche (46) des Presskopfes (45) eine im Wesentlichen glatte und / oder ebene Fläche ist, oder wobei die Druckfläche (46) des Presskopfes (45) eine konkave Form aufweist.

8. Verfahren gemäß Anspruch 6 oder 7, **dadurch gekennzeichnet, dass** die Druckfläche (46) des Presskopfes (45) beim Ausüben der Kraft (44) parallel zum Kopf (28) des ersten stiftförmigen Vorsprungs (18) beziehungsweise parallel zur von der ersten Seitenfläche (16) der ersten Tilgermasse (14) abgewandten Stirnseite des ersten stiftförmigen Vorsprungs (18) ausgerichtet wird.

9. Verfahren gemäß einem der Ansprüche 6 bis 8, **dadurch gekennzeichnet, dass** die Druckfläche (46) des Presskopfes (45) mit einem Vorschub (47) von weniger als 100 cm, bevorzugterweise weniger als 50 cm, besonders bevorzugterweise weniger als 25 cm, sowie ganz besonders bevorzugterweise weniger als 10 cm, zum Kopf (28) des ersten stiftförmigen Vorsprungs (18) hin bewegt wird um dann die senkrecht auf den ersten stiftförmigen Vorsprung (18) gerichtete Kraft (44) durch Pressen auszuüben.

10. Verfahren gemäß einem der vorhergehenden Ansprüche, **dadurch gekennzeichnet, dass** in Schritt c) solange die senkrecht auf den ersten stiftförmigen Vorsprung (18) gerichtete Kraft (44) durch Pressen ausgeübt wird, bis der erste stiftförmige Vorsprung (18) mit seinem Kopf (28) teilweise im Bereich einer ersten Kante (22) des ersten Lochs (20) an der ersten Fase (26) anliegt, wobei der Kopf (28) des ersten stiftförmige Vorsprungs (18) im Bereich der von der ersten Seitenfläche (16) der ersten Tilgermasse (14) abgewandten Stirnseite des ersten stiftförmigen Vorsprungs (18) angeordnet ist.

11. Verfahren gemäß einem der vorhergehenden Ansprüche, **dadurch gekennzeichnet, dass** während der gesamten Pressdauer die erste Tilgermasse (14) an die Reibbelagträgerplatte gemäß Schritt b) gedrückt wird.

12. Verfahren gemäß einem der vorhergehenden Ansprüche, **dadurch gekennzeichnet, dass** eine zweite Tilgermasse (15) zur Veränderung der Schwingung_starr mit der Reibbelagträgerplatte verbunden wird.

## Claims

1. A method for producing a carrier body (100) for a brake lining (200) of a disc brake (300), wherein the carrier body (100) has a friction lining carrier plate (10) for receiving a friction lining (11) and at least one first damper mass (14), which is connected rigidly to the friction lining carrier plate (10), for changing the oscillation, wherein the method is **characterized by** the following steps:
a) inserting a first pin-like projection (18) of the first damper mass (14) into a first hole (20) of the friction lining carrier plate (10), wherein the friction lining carrier plate (10) is placed on the first damper mass (14) with the first pin-like projection (18) projecting upwards, wherein the first pin-like projection (18) projects from a first side face (16) of the first damper mass (14) and from a first hole (20) and is formed integrally with the first damper mass (14),
b) pressing the first damper mass (14) against the friction lining carrier plate (10), so that the first side face (16) of the first damper mass (14) abuts against a first side face (12) of the friction lining carrier plate (10),
c) exerting a force (44) directed perpendicularly onto the first pin-like projection (18) by pressing until the first pin-like projection (18) is compressed to such an extent that said projection forms a form fit with an inner wall (40) of the first hole (20) in some regions inside the first hole (20), and a head (28) of the first pin-like projection (18) is deformed in such a way that it is widened seen circumferentially, and until there is a rigid connection between the friction lining carrier plate (10) and the first damper mass (14), wherein the force (44) directed perpendicularly to the first pin-like projection (18) is exerted by pressing over a pressing duration of 1s to 2.5s wherein, in order to produce a rigid connection between the friction lining carrier plate (10) and the first damper mass (14), only the force (44) directed perpendicularly to the first pin-like projection (18) is exerted by pressing, and no rotational movement and no tumbling is carried out during the exertion of the force (44) and no force is exerted that is directed sideways onto the first pin-like projection (18).

2. The method according to claim 1, **characterized in that** in step c), the force (44) directed perpendicularly onto the first pin-like projection (18) is exerted by pressing until the first pin-like projection (18) is compressed to such an extent that said projection forms a form fit with an inner wall (40) of the first hole (20) over the entire circumference in one region inside the first hole (20).

3. The method according to claim 1 or 2, **characterized in that** in step c), the force (44) directed perpendicularly onto the first pin-like projection (18) is exerted by pressing until the first pin-like projection (18) is compressed to such an extent that said projection forms a form fit with an inner wall (40) of the first hole (20) substantially over the entire depth (33) of the first hole (20) inside the first hole (20).

4. The method according to any one of the preceding claims, **characterized in that** in step c), the force (44) directed perpendicularly onto the first pin-like projection (18) is exerted by pressing with a substantially constant intensity over the entire pressing period.

5. The method according to any one of the preceding claims, **characterized in that** in step c), the force (44) directed perpendicularly onto the first pin-like projection (18) is exerted by pressing with an intensity of 10 kN to 80 kN, preferably 20 kN to 60 kN, particularly preferably 25 kN to 50 kN.

6. The method according to any one of the preceding claims, **characterized in that** in step c), the force (44) directed perpendicularly onto the first pin-like projection (18) is exerted by pressing by means of a pressing head (45), wherein the pressing head (45) is pushed or pressed with a pressure face (46) perpendicularly onto a head (28) of the first pin-like projection (18), wherein the head (28) of the first pin-like projection (18) is arranged in the region of the end face of the first pin-like projection (18) facing away from the first side face (16) of the first damper mass (14), wherein the pressure face (46) of the pressing head (45) faces the head (28) of the first pin-like projection (18).

7. The method according to claim 6, **characterized in that** the pressure face (46) of the pressing head (45) is a substantially smooth and/or flat surface, or wherein the pressure face (46) of the pressing head (45) has a concave shape.

8. The method according to claim 6 or 7, **characterized in that** when the force (44) is exerted, the pressure face (46) of the pressing head (45) is aligned parallel to the head (28) of the first pin-like projection (18) or parallel to the end face of the first pin-like projection (18) facing away from the first side face (16) of the first damper mass (14), respectively.

9. The method according to any one of claims 6 to 8, **characterized in that** the pressure face (46) of the pressing head (45) is moved towards the head (28) of the first pin-like projection (18) with a forward movement (47) of less than 100 cm, preferably less than 50 cm, particularly preferably less than 25 cm, very particularly preferably less than 10 cm, in order to then exert the force (44) directed perpendicularly onto the first pin-like projection (18) by pressing.

10. The method according to any one of the preceding claims, **characterized in that** in step c), the force (44) directed perpendicularly onto the first pin-like projection (18) is exerted by pressing until, with its head (28), the first pin-like projection (18) partially abuts against the first chamfer (26) in the region of a first edge (22) of the first hole (20), wherein the head (28) of the first pin-like projection (18) is arranged in the region of the end face of the first pin-like projection (18) facing away from the first side face (16) of the first damper mass (14).

11. The method according to any one of the preceding claims, **characterized in that** the first damper mass (14) is pressed against the friction lining carrier plate according to step b) for the entire pressing period.

12. The method according to any one of the preceding claims, **characterized in that** a second damper mass (15) for changing the oscillation is connected rigidly to the friction lining carrier plate.

## Revendications

1. Procédé de fabrication d'un corps porteur (100) pour une garniture de frein (200) d'un frein à disque (300), dans lequel le corps porteur (100) présente une plaque porte-garniture de friction (10) pour recevoir une garniture de friction (11) et au moins une première masse absorbante (14) reliée rigidement à la plaque porte-garniture de friction (10) pour modifier les vibrations, dans lequel le procédé est **caractérisé par** les étapes suivantes :
a) insertion d'une première protubérance en forme de broche (18) de la première masse absorbante (14) dans un premier trou (20) de la plaque porte-garniture de friction (10), dans lequel la plaque porte-garniture de friction (10) est placée sur la première masse absorbante (14) avec la première protubérance (18) en forme de broche faisant protubérance vers le haut, dans lequel la première protubérance en forme de broche (18) dépasse d'une première surface latérale (16) de la première masse absorbante (14) et du premier trou (20) et est formée en un seul tenant avec la première masse absorbante (14),
b) pressage de la première masse absorbante (14) sur la plaque porte-garniture de friction (10) de sorte que la première surface latérale (16) de la première masse absorbante (14) repose contre une première surface latérale (12) de la plaque porte- garniture de friction (10),
c) application d'une force (44) dirigée perpendiculairement à la première protubérance en forme de broche (18) par pression jusqu'à ce que la première protubérance en forme de broche (18) soit comprimée à un point tel qu'elle forme un ajustement positif à l'intérieur du premier trou (20) dans certaines zones avec une paroi intérieure (40) du premier trou (20), et une tête (28) de la première protubérance en forme de broche (18) est déformée de telle sorte qu'elle s'élargisse, vue circonférentiellement, et jusqu'à ce qu'il y ait une liaison rigide entre la plaque porte-garniture de friction (10) et la première masse absorbante (14), dans laquelle la force (44) dirigée perpendiculairement à la première protubérance en forme de broche (18) est exercée par pression pendant un temps de pression de 1s à 2,5s, dans lequel pour produire une liaison rigide entre la plaque porte-garniture de friction (10) et la première masse absorbante (14) seule la force (44) dirigée perpendiculairement à la première protubérance en forme de broche (18) est exercée par pression et aucun mouvement de torsion ou d'oscillation n'est effectué pendant l'application de la force (44) et aucune force latérale dirigée latéralement sur la première protubérance en forme de broche (18) n'est exercée.

2. Procédé selon la revendication 1, **caractérisé en ce qu'**à l'étape c) tant que la force (44) dirigée perpendiculairement à la première protubérance en forme de broche (18) est exercée par pression jusqu'à ce que la première protubérance en forme de broche (18) soit comprimée à un point tel qu'elle forme dans une zone un ajustement de forme entièrement circonférentiel avec la paroi intérieure (40) du premier trou (20) à l'intérieur du premier trou (20).

3. Procédé selon la revendication 1 ou 2, **caractérisé en ce qu'**à l'étape c) la force (44) dirigée perpendiculairement à la première protubérance en forme de broche (18) est exercée par pressage jusqu'à ce que la première protubérance en forme de broche (18) soit comprimée à un point tel qu'elle forme un ajustement de forme avec une paroi intérieure (40) du premier trou (20) à l'intérieur du premier trou (20) essentiellement sur toute une profondeur (33) du premier trou (20).

4. Procédé selon une des revendications précédentes, **caractérisé en ce qu'**à l'étape c) la force (44) dirigée perpendiculairement à la première protubérance en forme de broche (18) est exercée par pression pendant toute la durée d'appui avec une intensité sensiblement constante.

5. Procédé selon une quelconque des revendications précédentes, **caractérisé en ce qu'**à l'étape c) la force (44) dirigée perpendiculairement à la première protubérance en forme de broche (18) est exercée par pression avec une force de 10 kN à 80 kN, de préférence de 20 kN à 60 kN, de manière particulièrement préférée de 25 kN à 50 kN.

6. Procédé selon une quelconque des revendications précédentes, **caractérisé en ce qu'**à l'étape c) la force (44) dirigée perpendiculairement à la première protubérance en forme de broche (18) est exercée par pression à l'aide d'une tête de pression (45), dans lequel la tête de pression (45) étant pressée ou appuyée avec une surface de pression (46) perpendiculairement sur une tête (28) de la première protubérance en forme de broche (18), dans lequel la tête (28) de la première protubérance (18) en forme de broche est disposée dans la région de la face frontale de la première protubérance en forme de broche (18) tournée à l'opposé de la première face latérale (16) de la première masse absorbante (14), dans lequel la surface de pression (46) de la tête de pression (45) est tournée vers la tête (28) de la première protubérance en forme de broche (18).

7. Procédé selon la revendication 6, **caractérisé en ce que** la surface de pression (46) de la tête de pression (45) est une surface sensiblement lisse et/ou plane, ou la surface de pression (46) de la tête de pression (45) présente une forme concave.

8. Procédé selon la revendication 6 ou 7, **caractérisé en ce que** la surface de pression (46) de la tête de pression (45) lorsque la force (44) est exercée parallèlement à la tête (28) de la première protubérance en forme de broche (18) ou parallèlement à celle de la première surface latérale (16) de la première masse absorbante (14) tournée à l'opposé de la face d'extrémité de la première protubérance en forme de broche (18).

9. Procédé selon une quelconque des revendications 7 à 8, **caractérisé en ce que** la surface de pression (46) de la tête de pression (45) est déplacée avec une avance (47) inférieure à 100 cm, de préférence inférieure à 50 cm, de manière particulièrement préférée inférieure à moins de 25 cm, et plus préférablement moins de 10 cm, vers la tête (28) de la première protubérance en forme de broche (18) et ensuite la force (44) dirigée perpendiculairement à la première protubérance en forme de broche (18) est exercée par pression.

10. Procédé selon une des revendications précédentes, **caractérisé en ce qu'**à l'étape c) la force (44) dirigée perpendiculairement à la première protubérance en forme de broche (18) est exercée par pression jusqu'à ce que la première protubérance en forme de broche (18) avec sa tête (28) repose partiellement contre le premier chanfrein (26) au niveau d'un premier bord (22) du premier trou (20), dans lequel la tête (28) de la première protubérance en forme de broche (18) est disposée dans la zone de la face d'extrémité de la première protubérance en forme de broche (18) qui tournée à l'opposé de la première surface latérale (16) de la première masse absorbante (14).

11. Procédé selon une des revendications précédentes, **caractérisé en ce que** la première masse absorbante (14) est pressée contre la plaque porte-garniture de friction selon l'étape b) pendant toute la durée de pressage.

12. Procédé selon une des revendications précédentes, **caractérisé en ce qu'**une deuxième masse absorbante (15) est reliée rigidement à la plaque porte-garniture de friction pour modifier les vibrations.
